(19) **Europäisches Patentamt / European Patent Office / Office européen des brevets**

(11) **EP 4 258 204 B1**

(12) # EUROPEAN PATENT SPECIFICATION

(45) Date of publication and mention
of the grant of the patent:
**29.10.2025 Bulletin 2025/44**

(21) Application number: **22208899.9**

(22) Date of filing: **22.11.2022**

(51) International Patent Classification (IPC):
**G06T 3/40** $^{(2024.01)}$ **G06T 5/00** $^{(2024.01)}$

(52) Cooperative Patent Classification (CPC):
**G06T 3/4053; G06T 3/4046; G06T 5/70; G06T 5/90;**
G06T 2207/20081; G06T 2207/20084

(54) **IMAGE PROCESSING METHOD, APPARATUS, COMPUTER PROGRAM AND COMPUTER-READABLE DATA CARRIER**

BILDVERARBEITUNGSVERFAHREN, VORRICHTUNG, COMPUTERPROGRAMM UND COMPUTERLESBARER DATENTRÄGER

PROCÉDÉ DE TRAITEMENT D'IMAGE, APPAREIL, PROGRAMME INFORMATIQUE ET SUPPORT DE DONNÉES LISIBLE PAR ORDINATEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.04.2022 GB 202205153**

(43) Date of publication of application:
**11.10.2023 Bulletin 2023/41**

(73) Proprietor: **Milestone Systems A/S
2605 Brøndby (DK)**

(72) Inventors:
• **NASROLLAHI, Kamal
2605 Brøndby (DK)**
• **MOESLUND, Thomas B.
9000 Aalborg (DK)**
• **AAKERBERG, Andreas
9000 Aalborg (DK)**

(74) Representative: **Canon Europe Limited
European Intellectual Property Group
4 Roundwood Avenue
Stockley Park
Uxbridge UB11 1AF (GB)**

(56) References cited:
• **CHEN LIANGLIANG ET AL: "Structure-Preserving and Color-Restoring Up-Sampling for Single Low-Light Image", IEEE TRANSACTIONS ON CIRCUITS AND SYSTEMS FOR VIDEO TECHNOLOGY, IEEE, USA, vol. 32, no. 4, 4 June 2021 (2021-06-04), pages 1889 - 1902, XP011905063, ISSN: 1051-8215, [retrieved on 20210604], DOI: 10.1109/TCSVT.2021.3086598**
• **ZHUO DENG ET AL: "RFormer: Transformer-based Generative Adversarial Network for Real Fundus Image Restoration on A New Clinical Benchmark", ARXIV.ORG, CORNELL UNIVERSITY LIBRARY, 201 OLIN LIBRARY CORNELL UNIVERSITY ITHACA, NY 14853, 3 January 2022 (2022-01-03), XP091131080**
• **XIAOYI DONG ET AL: "CSWin Transformer: A General Vision Transformer Backbone with Cross-Shaped Windows", ARXIV.ORG, CORNELL UNIVERSITY LIBRARY, 201 OLIN LIBRARY CORNELL UNIVERSITY ITHACA, NY 14853, 1 July 2021 (2021-07-01), XP091006346**
• **ZHOU RUOFAN ET AL: "W2S: Microscopy Data with Joint Denoising and Super-Resolution for Widefield to SIM Mapping", 10 January 2021, 16TH EUROPEAN CONFERENCE - COMPUTER VISION - ECCV 2020, PAGE(S) 474 - 491, XP047589135**

**Description**

Technical field of the Invention

The present invention relates to image processing using machine learning. More precisely, the present invention relates to a method, an apparatus, a computer program and a storage medium comprising such a program, for enhancing the spatial resolution (dimensions) of an image and its lightness (prediction of how an observer or computer will perceive the quantity of light in the image or the luminances of the objects in the image).

The invention finds particular applications in the fields of computer vision and video surveillance, where there is a need to enhance the visibility, quality, (spatial) resolution and details of natural Low-Light Low-Resolution (LLLR) images prior to carrying out further operations on them such as object detection and/or recognition.

Background of the Invention

Single-Image Super-Resolution (SISR) aims at increasing the spatial resolution and producing High-Resolution (HR) details given a Low-Resolution (LR) input image.

Due to the many practical applications of enhancing details in images, Super-Resolution (SR) has been an active research field for decades. However, current State-of-the-Art (SoTA) SR methods are trained on well-illuminated images and they are therefore not suitable for reconstruction of real LR images captured in poor lighting conditions, e.g., by surveillance or remote sensing cameras.

The conventional strategy is therefore to correct the exposure level with dedicated Low-Light Enhancement (LLE) algorithms before super-resolving the image. However, this sequential processing scheme leads to poor reconstruction accuracy mainly due to error accumulation and the fact that both LLE and SR are highly ill-posed and ill-conditioned inverse problems. In contrast, it has been shown that joint SR and denoising, demosaicing, and deblurring leads to superior performance in all cases, compared to sequential processing.

Current SoTA SR methods are based on Convolutional Neural Networks (CNNs) which are typically trained on LR patches with a dimension of $64 \times 64$ pixels and their corresponding HR patch, typically of $\times 2$, $\times 3$, or $\times 4$ times larger scale. As reconstruction of HR details is mostly a local problem, i.e. distant neighbour pixels provide little information regarding the reconstruction of the local pixel, SR models do not benefit much from using larger training patches.

Early attempts at LLE relied on histogram equalization, illumination map estimation, and Retinex theory to correct the image illumination. However, as these methods fail to consider the inherent noise in the Low-Light (LL) images, the reconstruction results are often unsatisfactory. Recently, deep-learning has been utilized to learn an end-to-end mapping between LL and Normal-Light (NL) images. The Retinex theory was further explored in combination with deep learning, where CNNs were used to learn decomposition and illumination enhancement, and most recently, a self-reinforced Retinex projection model was proposed. Furthermore, Generative Adversarial Networks (GANs) have also been applied to image enhancement problem.

Nonetheless, LLE methods do not increase the spatial resolution of the images, but mainly aim at correcting the brightness level. As such, these methods only recover limited additional details in the image.

Moreover, for the problem of LLE, the inventors have found that the use of more global contextual information can provide valuable cues about the light enhancement level of specific pixels.

Part of the reason for this could be the ineffective long-range dependency modelling capabilities of CNNs, which limit their ability to benefit from more global contextual information.

Like LLE, image super-resolution is one of the fundamental low-level computer vision problems. From the first CNN based SR network, researchers have improved the reconstruction performance of the SR models by extending the network depth, utilizing residual learning, applying dense connections, and attention mechanisms. Research has also been focusing on improving the perceptual quality, and not only the reconstruction accuracy, by the use of feature losses and GANs. However, most approaches assume that the LR images are created by an ideal bicubic downsampling kernel, which is an oversimplification of the real-world situation.

Furthermore, real-world images are often degraded by additional factors besides just downsampling, e.g. blur, low-contrast, color-distortion, noise, and low-light to name a few. To remedy this, a research direction focused on SR methods that can handle more diverse degradations has emerged. These methods often improve upon classical SR methods by extending the degradation model to include more diverse degradations e.g. Gaussian noise, blur, and compression artifacts in the LR training images. Yet only very few works in the literature consider LR images degraded by low-light. Some of the most closely related works to the goal of SR of real natural LLLR RGB images address the problem within different image specific domains. For instance, a GAN-based method for reconstruction of synthetic LLLR face images has been presented. In addition, a dedicated method for SR of LL Near-Infrared (NIR) images has been presented, while a method for LL images captured by intensified charge-coupled devices has also been presented.

Therefore, as discussed above, no existing SR model has been developed for reconstructing real LLLR RGB images.

The prior art also comprises the two following documents:

- CHEN LIANGLIANG ET AL: "Structure-Preserving and Color-Restoring Up-Sampling for Single Low-Light Image", IEEE TRANSACTIONS ON CIRCUITS AND SYSTEMS FOR VIDEO TECHNOLOGY, IEEE, USA, vol. 32, no. 4, 4 June 2021 (2021-06-04), pages 1889-1902, XP011905063, ISSN: 1051-8215, DOI: 10.1109/TCSVT.2021.3086598 [retrieved on 2021-06-04]
- ZHUO DENG ET AL: "RFormer: Transformer-based Generative Adversarial Network for Real Fundus Image Restoration on A New Clinical Benchmark", ARXIV.ORG, CORNELL UNIVERSITY LIBRARY, 201 OLIN LIBRARY CORNELL UNIVERSITY ITHACA, NY 14853, 3 January 2022 (2022-01-03), XP091131080

<u>Summary of the Invention</u>

The present invention addresses at least some of the above-mentioned issues by using a novel transformer-based multi-scale hierarchical encoder-decoder network (hereinafter called RELIEF for Resolution and Light Enhancement Transformer), for joint LLE and SR.

The present invention uses Transformers to effectively utilise additional global contextual information for reconstruction of Low-Light Low-Resolution (LLLR) images, as Transformers can show impressive performance on both high- and low-level vision tasks due to their high capability in modelling long-range dependencies.

Aspects of the present invention are set out by the independent claims and preferred features of the invention are set out in the dependent claims.

According to a first aspect there is provided an image processing method comprising: acquiring a first image whose spatial resolution and lightness are to be enhanced; generating a residual image from the first image using a multi-scale hierarchical neural network for joint learning of low-light enhancement and super-resolution, the network comprising an encoder stage and a decoder stage forming a plurality of symmetrical encoder-decoder levels, each encoder and decoder in each level comprising a vision transformer block; and generating a reconstructed image based on the first and residual images.

Optionally, the network is a residual neural network comprising skip-connections.

Optionally, the network has a U-shaped architecture, the encoder stage reducing the spatial resolution of the first image while increasing the number of feature channels of the first image at every level, and the decoder stage increasing the said spatial resolution while reducing the said number of feature channels at every level, and the spatial resolution of the generated residual image is identical to the spatial resolution of the first acquired image.

Optionally, each vision transformer block uses a Cross-Shaped Window multi-headed self-attention mechanism.

Optionally, the self-attention mechanism comprises horizontal and vertical stripes in parallel that form a cross-shaped window, and the widths of the stripes are gradually increased throughout the depth of the network.

Optionally, each vision transformer block is an Enhanced Cross-Shaped Window transformer block obtained by combining a Cross-Shaped Window self-attention mechanism with a Locally-enhanced Feed-Forward module and a Locally-Enhanced Positional Encoding module.

Optionally, the reconstructed image $\hat{I}_{NLHR}$ is generated based on the following equation:

$$\hat{I}_{NLHR} = (I_{LLLR} + I_R) \uparrow_s$$

wherein $I_{LLLR}$ is the first image, $I_R$ is the residual image and s is a scaling factor for the upsampling and the symbol + means element-wise addition.

Optionally, upsampling the combination of the acquired first image and generated residual image comprises performing pixel-shuffling and convolutional operations.

Optionally, the method further comprises extracting a low-level feature map $F_0 \in \mathbb{R}^{H \times W \times C}$ from the first image, wherein W and H are a width and a height of the first image and C a number of feature channels of the first image, and inputting the low-level feature map $F_0$ to the first encoder level.

Optionally, extracting a low-level feature map $F_0$ comprises performing convolutional operations.

Optionally, generating the residual image comprises extracting deep-level features $F_d$ from the low-level features $F_0$ in the plurality of symmetrical encoder-decoder levels.

Optionally, generating the residual image comprises, after each encoder level, reshaping the features output by that encoder to 2D feature maps and downsampling the features output by that encoder.

Optionally, generating the residual image comprises, after each decoder level, upsampling the features output by the decoder in that decoder level.

Optionally, upsampling the features output by the decoder comprises at least one transposed convolutional operation.

Optionally, the network comprises a bottleneck stage between the last encoder level and the first decoder level.

Optionally, an output of the bottleneck stage is processed to upsample the size of a latent feature map output at the last encoder level and to reduce the number of feature channels input to the first decoder level.

Optionally, the network comprises a skip-connection which concatenates the output of the last decoder level with the output of the bottleneck, so as to input a concatenated feature map in the first decoder level.

Optionally, the network comprises other skip-connections which respectively concatenate a feature map from the encoder of that level and a feature map from the decoder of the preceding decoder level resulting in each level in a feature map input in the decoder of that level with twice the number of feature channels of the encoder in that level.

Optionally, the neural network is trained beforehand with low-resolution patch images and corresponding high-resolution patch images, wherein the low-resolution patch images are bigger than 64 x 64 pixels, and wherein the corresponding high-resolution patch images are at least 2 to 4 times bigger.

According to a second aspect there is provided a computer program which, when run on a computer, causes the computer to carry out the method according to any one of the examples or embodiments disclosed herein.

According to a third aspect there is provided a computer-readable storage medium having stored thereon the said computer program.

According to a fourth aspect there is provided an image processing apparatus comprising: acquisition means configured to acquire a first image whose spatial resolution and lightness are to be enhanced; first generation means configured to generate a residual image from the first image using a multi-scale hierarchical neural network for joint learning of low-light enhancement and super-resolution, the network comprising an encoder stage and a decoder stage forming a plurality of symmetrical encoder-decoder levels, each encoder and decoder in each level comprising a vision transformer block; and second generation means configured to generate a reconstructed image based on the first and residual images.

Optionally, the network is a residual neural network comprising skip-connections.

Optionally, each vision transformer block uses a Cross-Shaped Window multi-headed self-attention mechanism, wherein the self-attention mechanism comprises horizontal and vertical stripes in parallel that form a cross-shaped window, and wherein the widths of the stripes are gradually increased throughout the depth of the network.

Optionally, each vision transformer block is an Enhanced Cross-Shaped Window transformer block combining a Cross-Shaped Window self-attention mechanism with a Locally-enhanced Feed-Forward module and a Locally-Enhanced Positional Encoding module.

Optionally, the network comprises a bottleneck stage between the last encoder level and the first decoder level.

Additional features of the present invention will become apparent from the following description of embodiments with reference to the attached drawings.

## Brief description of the drawings

Embodiments of the present invention will now be described, by way of example only, with reference to the accompanying drawings in which:

Figure 1A is a schematic diagram of the global architecture of the network of the invention. Figures 1B to 1D represent enlarged and detailed portions of Figure 1A.

Figure 2 is a schematic diagram of an ECSWin Self-Attention Transformer block according to the invention.

Figure 3 illustrates a LePE positional encoding mechanism.

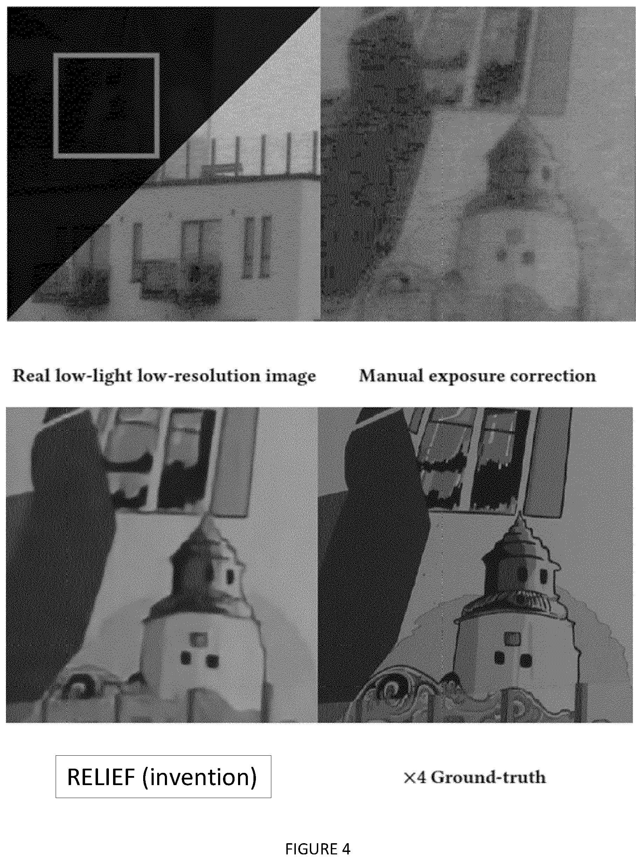

Figure 4 illustrates a comparison of the invention with an image subject to manual exposure correction and a ground truth (GT) image.

Figures 5 and 6 illustrate examples of joint LLE and 4X SR using the network of the invention on two different datasets, i.e. RELLISUR and SICE datasets, respectively.

Figure 7 illustrates the visual effect of training the network of the invention with different LR patch sizes, by comparison with a ground truth image.

## Detailed Description of the Invention

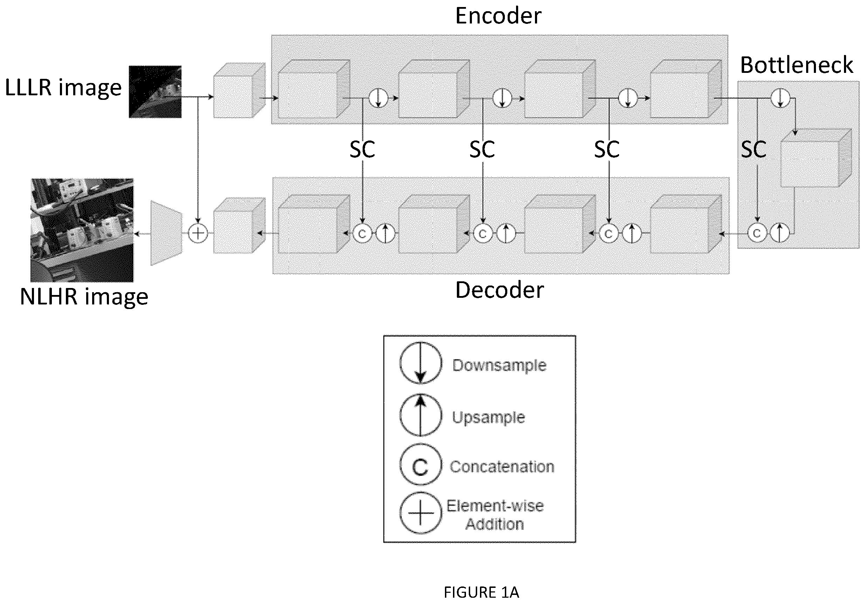

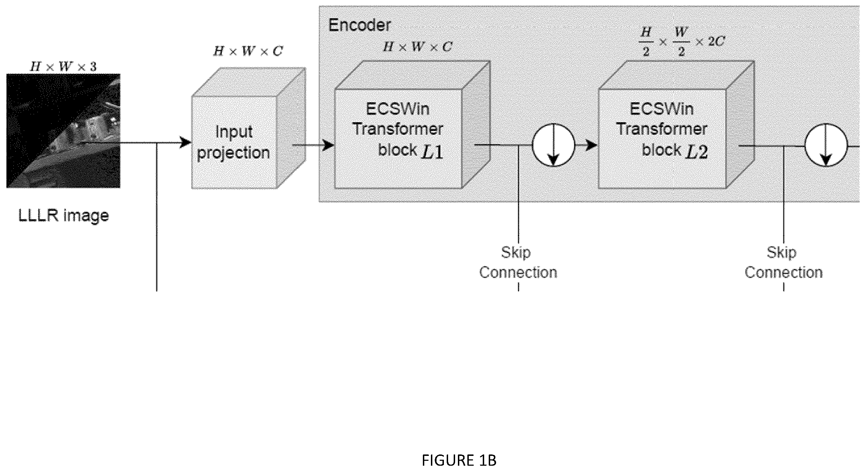

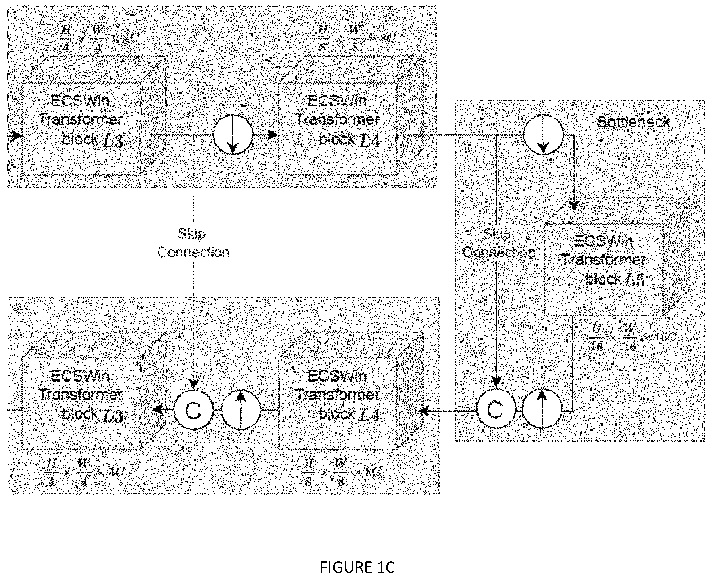

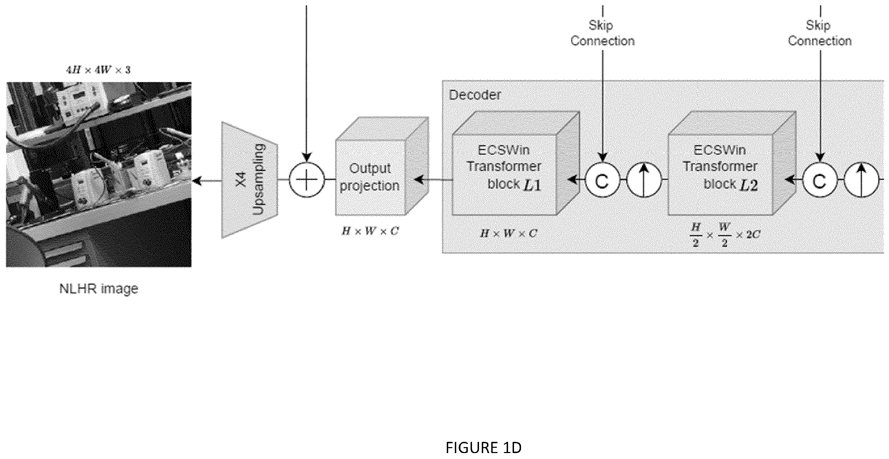

Figure 1A shows a schematic diagram of the global architecture of the network of the invention and Figures 1B to 1D represent enlarged and detailed portions of Figure 1A.

*Overall pipeline (as shown in Figures 1A-1D)*

Given an LLLR image $I_{LLLR} \in \mathbb{R}^{H \times W \times 3}$,

where W and H are the width and height, respectively, the goal is to restore its Normal-Light High-Resolution (NLHR) version $I_{NLHR}$. To accomplish this, RELIEF first extracts low-level features $F_0 \in \mathbb{R}^{H \times W \times C}$, where $C$ is the number of channels, from $I_{LLLR}$. $F_0$ is preferably obtained by a 3×3 convolutional layer with LeakyReLU. Next, deep features $F_d$ are extracted from the low-level features $F_0$ in $K$ symmetrical encoder-decoder levels. Each level contains multiple ECSWin Transformer blocks. The blocks preferably have large attention areas to capture long-range dependencies.

After each encoder level, the features are preferably reshaped to 2D feature maps and downsampled, while the number of channels is increased. We preferably perform this operation using a 4 × 4 convolutional operation with stride 2. We preferably use $K = 4$ encoder levels and as such the latent feature output at the last encoder stage is

$F_l \in \mathbb{R}^{\frac{H}{8} \times \frac{W}{8} \times 8C}$ given an $F_0 \in \mathbb{R}^{H \times W \times C}$ input feature map.

Next, to capture even longer dependencies, we preferably incorporate a bottleneck stage between the encoder and decoder at the lowest level. The output from the bottleneck stage is preferably processed by a 2×2 transposed

convolution $I_R \in \mathbb{R}^{H \times W \times 3}$ operation with stride 2 to upsample the size of the latent features and reduce the channel number before entering the first decoder level. To improve the reconstruction process, skip-connections (SC in Figure 1A) are preferably used to concatenate encoder and decoder features resulting in feature maps with twice the amount of channels. After each decoder Transformer block, the features are upsampled with a transposed convolution operation similar to the one preferably used after the bottleneck stage. Then, at the last decoder level, the deep features $F_d$ is preferably reshaped using a 3 × 3 convolutional layer to obtain a residual image.

Finally, the reconstructed HR and light-enhanced image is obtained preferably as $\hat{I}_{NLHR} = (I_{LLLR} + I_R) \uparrow s$, where s is the scaling factor of the upsampling operation. The latter is preferably performed with pixel-shuffle and 3 × 3 convolutional operations. We optimize RELIEF with $L$1 pixel loss.

*ECSWin Self-Attention Transformer Block*

The computational complexity of the original full self-attention mechanism grows quadratically with the input size and is therefore not feasible to use in combination with large training image patches. Several works have tried to reduce the computational complexity by shifted, halo, and focal windows to perform self-attention. However, for most methods, the effective receptive field grows slowly, which hinders the long-range modelling capability. To reduce the computational burden, while maintaining strong long-range modelling capability, we use a Cross-Shaped Window (CSWin) attention mechanism. With CSWin, self-attention is calculated in horizontal and vertical stripes by splitting the multi-heads into parallel groups to achieve efficient global self-attention. We preferably gradually increase the widths of the stripes throughout the depth of the network to further enlarge the attention area and limit the computational cost. To further enhance the reconstruction performance, we preferably combine the CSWin self-attention mechanism, with Locally-enhanced Feed-Forward (LeFF) and Locally-Enhanced Positional Encoding (LePE) and form our ECSWin Transformer block. The different components will be described in detail in the following sections.

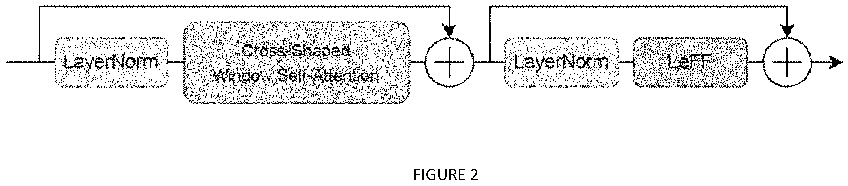

As illustrated in Figure 2, each ECSWin Transformer block is preferably composed of layer normalization layers, a CSWin self-attention module, residual connections and the LeFF layer. More formally, the ECSWin Transformer block can preferably be defined as:

$$\hat{X}^l = \text{CSWin-Attention}\left(\text{LN}\left(X^{l-1}\right)\right) + X^{l-1},$$

$$X^l = \text{LeFF}\left(\text{LN}\left(\hat{X}^l\right)\right) + \hat{X}^l,$$

where LN represents the layer normalization, and $\hat{X}^l$ and $X^l$ are the outputs of the CSWin and LeFF modules, respectively. We design our RELIEF architecture to contain multiple CSWin Transformer blocks at each encoder-decoder level. Next, we describe the locally-enhanced feed-forward network and positional encoding in ECSWin.

*Locally-enhanced Feed-Forward Network*

To better utilize local context, which is essential in image restoration, we exchange the Multi-Layer Perceptron (MLP) based feed-forward network used in the vanilla Transformer block with a LeFF layer. In the LeFF layer, the feature dimension of the tokens is preferably increased with a linear projection layer and hereafter reshaped to 2D feature maps. Next, a $3 \times 3$ depth-wise convolutional operation is preferably applied to the reshaped feature maps. Lastly, the feature maps are preferably flattened to tokens, and the channels are reduced with a linear layer such that the dimension of the enhanced tokens matches the dimension of the input. A GELU activation function is preferably used after each linear and convolutional layer.

*Locally-enhanced positional encoding*

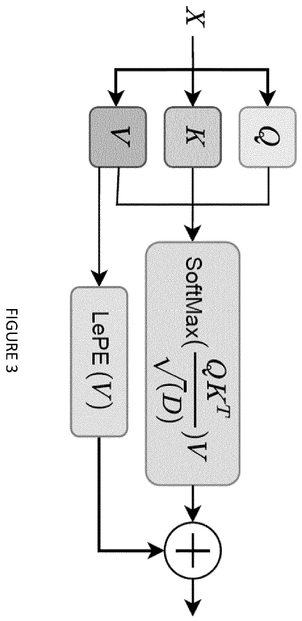

As the self-attention mechanism inherently ignores positional information in the 2D image space, we preferably use positional encoding to add such information back. Different from the typical encoding mechanisms Absolute Positional Encoding (APE), Relative Positional Encoding (RPE), and Conditional Positional Encoding (CPE) that add positional information into the input tokens before the Transformer Blocks, we preferably use LePE, implemented with a depth-wise convolution operator, to incorporate positional information within each Transformer block. As seen in Figure 3, LePE operates in parallel directly on V from the query ($Q$), key ($K$), and value ($V$) pairs obtained by a linear transformation of the input $X$.

As such, the self-attention computation is preferably formulated as:

$$\text{Attention}(Q, K, V) = \text{SoftMax}(\frac{QK^T}{\sqrt{D}})V + \text{DWC}(V)$$

where DWC is the depth-wise convolution operator.

*Experiments and analysis*

*Datasets*

The recent RELLISUR dataset, is the only publicly available dataset of real degraded LLLR images and their high-quality NLHR counterparts. The RELLISUR dataset contains 850 distinct sequences of LLLR images, with five different degrees of under-exposure in each sequence, paired with NLHR images of three different scale levels. In our work, we experiment with $\times 4$ upscaling which is the most challenging scale factor in the dataset.

We follow a known pre-defined split, and as such the number of train, val, and test images are 3610, 215, and 425, respectively.

SICE is a dataset of 589 various scenes captured at different exposure levels, ranging from under to overexposed including a correctly exposed Ground-Truth (GT) image. We follow a known train test split, resulting in 58 test and 531 train images. We preferably use the GT normal-light images as is, but preferably use only the darkest exposure of each scene as the LL images during both training and testing. We synthetically create degraded LR versions of the LL images to obtain paired degraded LLLR and NLHR images. We degrade the LL images by first convolving the images with an $11 \times 11$ Gaussian blur kernel with a standard deviation of 1.5 before downsampling with factor $\times 4$. Next, we model sensor noise by adding Gaussian noise with zero mean and a standard deviation of 8. Finally, we save the images in JPEG format with a quality setting of 70 to add compression artifacts. We discard a total of 8 images from the training set, which resolution are less than $256 \times 256$ pixels after the downsampling. Evaluation is performed on $256 \times 256$ center crops.

*Evaluation metrics*

We adopt two hand-crafted (PSNR, SSIM) and one learning-based (DISTS) Full-Reference Image Quality Assessment (FRIQA) metrics for our quantitative comparisons. PSNR is a measure of the peak error between the reconstructed image and the GT, while SSIM is more focused on visible structure differences. However, none of these metrics correlates well with the perceived image quality. To this end, we preferably use DISTS which better captures the perceptual image quality as judged by human observers. For all metrics, we report scores computed on the RGB channels.

*Implementation details*

We train our model from scratch for $5 \times 10^5$ iterations with a batch size of 16. We preferably use the ADAM optimizer with a learning rate of 2e-4 which we decrease with a factor 0.5 at $2\times10^5$, $4\times10^5$ and $4.5\times10^5$. For data augmentation, we perform rotation and horizontal and vertical flips. We preferably use 4 encoder-decoder levels in our RELIEF implementation, with two ECSWin Transformer blocks at each level, and one in the bottleneck. The number of attention heads and dimensions of the stripe widths in the encoder is preferably set to [4,8,16,32] and [1,2,8,8], respectively, which are mirrored in the decoder. In the bottleneck, 32 heads and a stripe width of 8 are preferably used. We preferably use channel dimension $C = 48$ for the first encoder level in all experiments. As such, the resulting number of feature channels from level-1 to level-5 becomes [48,96,192,384,768].

*Comparison with existing methods*

To the best of our knowledge, no existing method in the literature can handle reconstruction of real LLLR RGB images. To this end, we compare our proposed method against dedicated methods for LLE, SR, and general image restoration. MIRNet and ESRGAN are SoTA methods for LLE and SR, respectively. To enable upsampling together with LLE we append a Pixel-shuffle layer to MIRNet. As the VGG-discriminator in ESRGAN is not compatible with large training patches, we preferably use a known patch discriminator instead. SwinIR is a SoTA Transformer based method for general image restoration e.g. SR, JPEG compression artifact reduction, and denoising. We preferably use the real-world SR configuration and Pixel-shuffle upsampling for SwinIR. We preferably use a LR training patch size of $256 \times 256$ pixels, and re-train all competing methods using the same training hyper-parameters as used for our RELIEF for a fair comparison. MIRNet and SwinIR are optimized with L1 loss, while ESRGAN is optimized with a combination of L1, perceptual and adversarial loss as proposed by the inventors. We emphasize that none of the above-mentioned exiting methods are designed for joint LLE and SR, but once trained on such data they can still serve as baselines against our proposed method.

**Table 1: Overview of different models and the number of parameters $\times10^6$ and Giga Multiply-Accumulates per Second (GMACs).**

| Model | | Parameters | GMACs |
|---|---|---|---|
| MIRNet | + Pixel-shuffle | 31.8 | 51.0 |
| ESRGAN | | 23.2 | 100.0 |
| SwinIR | | 11.6 | 47.2 |
| **RELIEF** | | 46.3 | 5.7 |

*Results*

*Quantitative results.* As seen in Table 2, RELIEF significantly outperforms the other methods on all metrics. Our method obtains gains in PSNR of 0.28 and 0.78dB on the RELLISUR and SICE datasets, respectively. Similarly, our RELIEF also achieves the best perceptual quality, according to the DISTS metric, even though our method is not optimized with perceptual losses like ESRGAN.

As seen in Table 1, our RELIEF has the highest number of parameters, but a significantly lower computational burden than any of the compared methods, e.g. 5.7 vs. 47.2 GMACs for SwinIR. However, as proved by empirical evidence in Section 4.6.2, we can obtain comparable performance with a RELIEF variant with less than half the number of parameters.

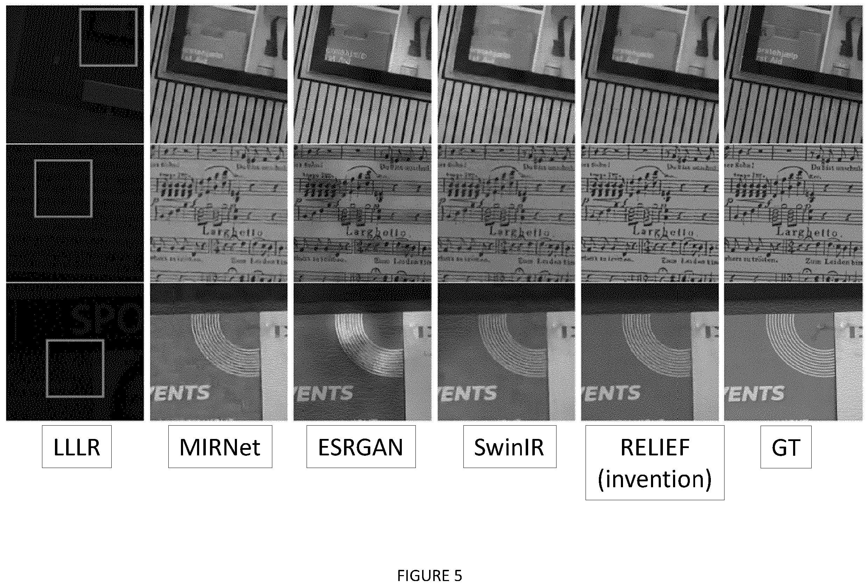

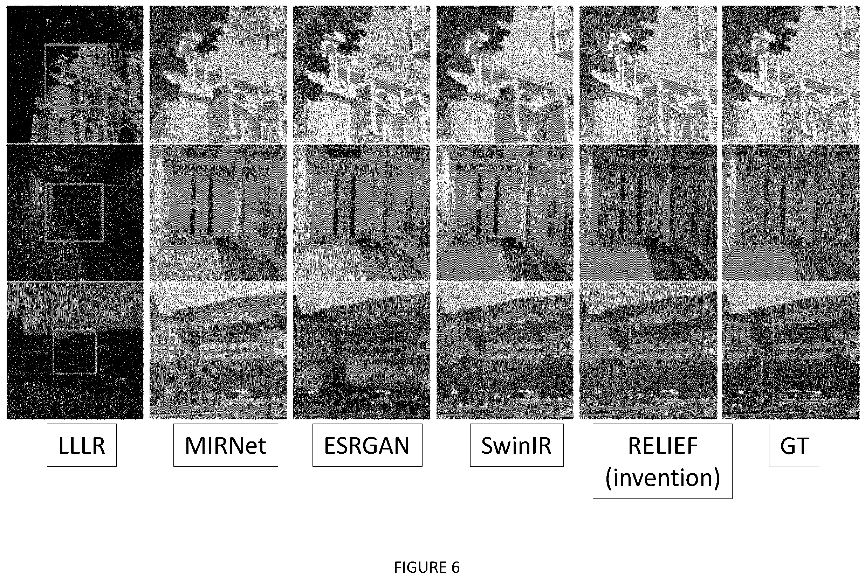

*Qualitative results.* We show visual comparisons of different methods on both the RELLISUR and SICE datasets in Figures 5 and 6, respectively. As seen, our RELIEF also show its clear advantages against the other methods, by producing the most visually pleasing reconstructions with the lowest number of artifacts. In the RELLISUR dataset, there are severe noise and color distortions hiding in the extremely low-light low-resolution images, which methods like MIRNet and ESRGAN struggle to remove. In comparison, SwinIR produces less artifacts, but our RELIEF reconstructs images with the most accurate colors and the least artifacts while preserving most of the structural content. This is especially noticeable in Figure 5 second and third row, where our method is the only one that manages to reconstruct an uniform and clean background as intended, without compromising edges and fine details. The same trend can be observed with the visual results from the SICE dataset, where images produced by MIRNet and ESRGAN contains severe visual defects, while our method is more faithful to the ground-truth. The main difference between SwinIR and our method is that the reconstructions produced by our methods appears much sharper and with less color distortions.

**Table 2: Quantitative comparison of state-of-the-art methods for joint LLE and ×4 SR on the RELLISUR and SICE datasets.**

| Method | | RELLISUR | | | | SICE | | | |
|---|---|---|---|---|---|---|---|---|---|
| | | PSNR ↑ | SSIM ↑ | DISTS | ↓ | PSNR ↑ | SSIM ↑ | DISTS | ↓ |
| MIRNet | + Pixel-shuffle | 21.04 | 0.7619 | 0.1609 | | 18.02 | 0.6760 | 0.2749 | |
| ESRGAN | | 17.49 | 0.6724 | 0.1518 | | 16.44 | 0.6271 | 0.2611 | |
| SwinIR | | 18.99 | 0.7478 | 0.1705 | | 17.66 | 0.6867 | 0.2753 | |
| **RELIEF** | | **21.32** | **0.7686** | **0.1364** | | **18.80** | **0.6980** | **0.2606** | |

<u>*Ablation Studies*</u>

In this section, we investigate the effectiveness and necessity of the components in RELIEF. All evaluations are conducted on RELLISUR using a LR training patch size of 64×64 and a channel dimension $C = 48$, unless otherwise stated.

*Impact of skip-connections and bottleneck layer.* Table 3 shows three variants of our network: no skip-connections, no bottleneck layer, and the proposed RELIEF network. From the table it can be seen that the skip-connections and bottleneck layer are both important as the PSNR drops by 0.64 and 0.59dB by removal of these network components, respectively.

**Table 3: Ablation on different network designs.**

| Design | No skip-conn. | No bottleneck | RELIEF |
|---|---|---|---|
| PSNR ↑ | 19.14 | 19.20 | 19.78 |

*Model parameters.* We experiment with different amount of model parameters to find a trade-off between accuracy and complexity by varying the channel number $C$. As shown in Table 4, we design three variants of RELIEF: $RELIEF_S$, $RELIEF_M$, and $RELIEF_L$. We observe that the PSNR is correlated with the number parameters until a certain point, but also that the parameters and GMACs grows quadratically. We choose a channel number of 48 to balance performance and model size.

**Table 4: Comparison of different channel dimensions and the resulting number of model parameters, GMACs and reconstruction accuracy.**

| Model | $C$ | Parameters $\times 10^6$ | GMACs | PSNR ↑ |
|---|---|---|---|---|
| **$RELIEF_S$** | 32 | 20.6 | 2.59 | 19.68 |
| **$RELIEF_M$** | 48 | 46.3 | 5.74 | 19.78 |
| **$RELIEF_L$** | 64 | 82.1 | 10.13 | 19.80 |

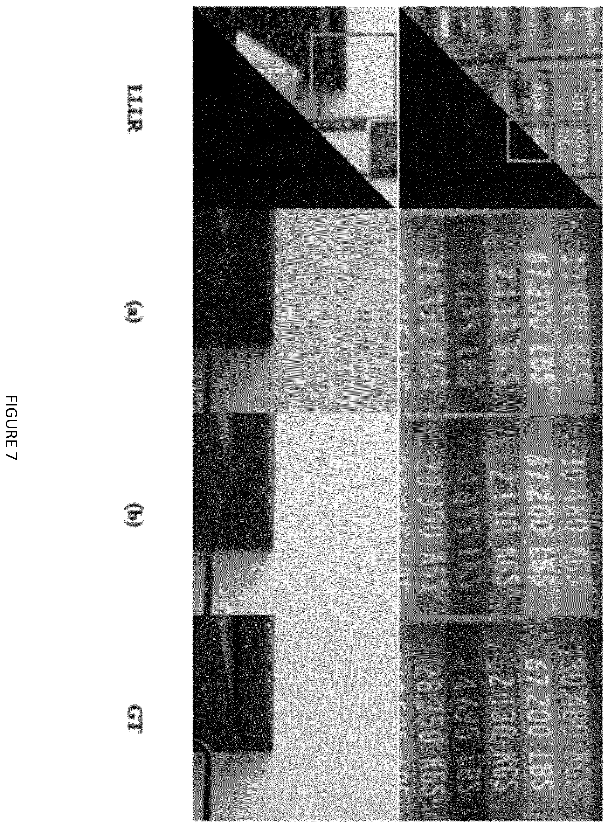

*Training patch size.* Figure 7 and Table 5 shows the effect of increasing the LR training patch size from 64×64 (Figure 7(a)) to 256×256 pixels (Figure 7(b)). As seen, larger training patches not only improves the quantity of details in the reconstructions (Figure 7, top row), but also ensures that smooth regions appear more uniform and with less artifacts (Figure 7, bottom row). This is also reflected in the quantitative results presented in Table 5, where a larger training patch size yields 1.58dB higher reconstruction accuracy compared to the smaller patch size. This demonstrates the effectiveness of our proposed method in terms of leveraging more global contextual information for joint LLE and SR.

**Table 5: Ablation on training patch sizes.**

| LR patch size | PSNR ↑ | SSIM ↑ | DISTS | ↓ |
|---|---|---|---|---|
| 64 × 64 | 19.78 | 0.7430 | 0.1917 | |
| 256 × 256 | **21.32** | **0.7686** | **0.1364** | |

**Table 6: Ablation on different multi-headed self-attention mechanisms, feed-forward networks, and positional-encoding mechanisms.**

| MSA | FFN | | PE | | PSNR ↑ |
|---|---|---|---|---|---|
| | MLP | LeFF | RPE | LePE | |
| Swin | ✓ | - | ✓ | - | 18.81 |
| | ✓ | - | - | ✓ | 19.49 |
| CSWin | - | ✓ | - | - | 19.63 |
| | - | ✓ | - | ✓ | **19.78** |

*Attention and locality.* We compare different multi-headed self-attention mechanisms, feed-forward networks, and positional-encoding mechanisms for the Transformer blocks in RELIEF to show the effect on the reconstruction performance. As seen in Table 6, the best performing configuration with cross-shaped window attention, and enhanced locality in the feed-forward network and positional-embedding yields 0.97dB improvement over the configuration with shifted-window attention, MLP feed-forward network and relative-positional encoding without locality enhancement. Compared to CSWin, our ECSWin block with locality enhanced feed-forward network results in 0.15dB PSNR gain.

*Conclusion*

The invention introduces RELIEF, a novel U-shaped multi-scale hierarchical Transformer network, particularly applicable for reconstruction of real LLLR images. With its efficient ECSWin Transformer blocks, capable of capturing long-range dependencies and local context, RELIEF can utilize large training patch sizes which leads to better reconstruction performance making it capable of revealing previously hidden details in real low-visibility images. Experimental results on two benchmark datasets show that the method according to the invention outperforms state-of-the-art methods in terms of reconstruction accuracy and visual quality.

The invention also provides a computer program which, when run on a computer, causes the computer to carry out the method according to any one of the previous embodiments and features.

The invention also provides a computer-readable data carrier having stored thereon the above-mentioned computer program.

The invention also provides an image processing apparatus comprising: acquisition means configured to acquire a first image whose spatial resolution and lightness are to be enhanced; first generation means configured to generate a residual image from the first image using a multi-scale hierarchical neural network for joint learning of low-light enhancement and super-resolution, the network comprising an encoder stage and a decoder stage forming a plurality of symmetrical encoder-decoder levels, each encoder and decoder in each level comprising a vision transformer block; and second generation means configured to generate a reconstructed image based on the first and residual images.

The image processing apparatus according to the invention may be configured to perform some or all of the steps or operations described in connection with the image processing method of the invention. That is to say, the features described in connection with the image processing method can also be part of or be performed by the apparatus. The apparatus may for instance be configured to run the above-mentioned computer program, preferably from the above-mentioned computer-readable data carrier.

The present invention also provides a video surveillance system comprising one or more video cameras and the aforementioned image processing apparatus, which also preferably runs a video management system (VMS) (which can be in the form of a software, hardware, or a combination of both) receiving one or more video streams and/or metadata from the said one or more video cameras. For instance, XProtect® is a VMS developed and distributed by the Applicant that can be used to retrieve and play live and recorded video surveillance data from one or more video cameras and optionally from one or more recording servers in the video surveillance system.

In such a video surveillance system, the image processing apparatus is configured to process at least some of the frames included in the received video surveillance data, each first image to be processed corresponding to at least a part of a frame of the received surveillance data. Preferably, the image processing apparatus may process several or all frames of the received video surveillance data, each respective first image to be processed corresponding to at least a part of a respective frame of the received surveillance data. In other words, the image processing apparatus may process the images of the one or more video surveillance cameras on a continuous basis or for at least a period of time, in a real-time or delayed manner as need be, for the frames received from the one or more video cameras. That is to say, the image processing apparatus may process one or more video streams, the first image(s) to be processed being acquired from the one or more video streams.

Within the context of the present invention, the term "first image" should be construed as being a full frame or at least a part of such a frame and corresponds for instance to the LLLR image described above. Preferably, the "first image" corresponds to a part of a frame (as captured by a video surveillance camera or otherwise) but several "first images" may also correspond to different parts of the same frame. This allows to limit the computational burden to only those parts of the frame(s) which need to be subjected to LLE and SR.

As an example embodiment, assume a video camera overlooking a parking lot, where a part of a captured image is in the sun, and another part is in the shade or is otherwise a low light part of the image. The video camera may adapt its exposure settings to the bright part of the picture, i.e. the part in the sun. The operator of the VMS will then have a hard time seeing the part of the image in the low light part of the image. To solve this issue, the operator may run the aforementioned method on one or more parts of the image (or preferably video) where there is low light. Alternatively, the image processing apparatus may be configured to automatically run the aforementioned method without intervention of the operator.

As another example embodiment, the video surveillance system may be installed in a casino having at least one video camera overlooking at least one gambling table. Light conditions are good on the surface of the table, but the operator may also want to examine what the players are doing with their hands next to the table, which would be the low light part of the image(s). Thus, the image processing apparatus may be configured to select, as the first image(s), the one or more parts of the captured video surveillance data where there is low light.

While the present invention has been described with reference to examples and embodiments, it is to be understood that the invention is not limited to the disclosed examples and embodiments. The present invention can be implemented in various forms without departing from the principal features of the present invention as defined by the claims.

**Claims**

1. An image processing method comprising:

   acquiring a first image whose spatial resolution and lightness are to be enhanced;
   generating a residual image from the first image using a multi-scale hierarchical neural network for joint learning of low-light enhancement and super-resolution, the network comprising an encoder stage and a decoder stage forming a plurality of symmetrical encoder-decoder levels, each encoder and decoder in each level comprising a vision transformer block;
   generating a reconstructed image based on the first and residual images.

2. The image processing method according to claim 1, wherein the network is a residual neural network comprising skip-connections.

3. The image processing method according to any one of the preceding claims, wherein the network has a U-shaped architecture, the encoder stage reducing the spatial resolution of the first image while increasing the number of feature channels of the first image at every level, and the decoder stage increasing the said spatial resolution while reducing the said number of feature channels at every level, wherein the spatial resolution of the generated residual image is identical to the spatial resolution of the first acquired image.

4. The image processing method according to any one of the preceding claims, wherein each vision transformer block uses a Cross-Shaped Window multi-headed self-attention mechanism.

5. The image processing method according to any one of the preceding claims, wherein each vision transformer block is an Enhanced Cross-Shaped Window transformer block obtained by combining a Cross-Shaped Window self-attention mechanism with a Locally-enhanced Feed-Forward module and a Locally-Enhanced Positional Encoding module.

6. The image processing method according to any one of the preceding claims, wherein the reconstructed image $\hat{I}_{NLHR}$ is generated based on the following equation:

$$\hat{I}_{NLHR} = (I_{LLLR} + I_R) \uparrow_s$$

wherein $I_{LLLR}$ is the first image, $I_R$ is the residual image and s is a scaling factor for the upsampling and the symbol + means element-wise addition.

7. The image processing method according to any one of the preceding claims, comprising extracting a low-level feature map $F_0 \in \mathbb{R}^{H \times W \times C}$ from the first image, wherein W and H are a width and a height of the first image and C a number of feature channels of the first image, and inputting the low-level feature map $F_0$ to the first encoder level.

8. The image processing method according to any one of the preceding claims, wherein the network comprises a bottleneck stage between the last encoder level and the first decoder level.

9. The image processing method according to anyone of the preceding claims, wherein the neural network is trained beforehand with low-resolution patch images and corresponding high-resolution patch images, wherein the low-resolution patch images are bigger than 64 x 64 pixels, and wherein the corresponding high-resolution patch images are at least 2 to 4 times bigger.

10. A computer program which, when run on a computer, causes the computer to carry out the method according to any one of the preceding claims.

11. An image processing apparatus comprising:

acquisition means configured to acquire a first image whose spatial resolution and lightness are to be enhanced; first generation means configured to generate a residual image from the first image using a multi-scale hierarchical neural network for joint learning of low-light enhancement and super-resolution, the network comprising an encoder stage and a decoder stage forming a plurality of symmetrical encoder-decoder levels, each encoder and decoder in each level comprising a vision transformer block; second generation means configured to generate a reconstructed image based on the first and residual images.

12. The image processing apparatus according to claim 11, wherein the network is a residual neural network comprising skip-connections.

13. The image processing apparatus according to claim 11 or 12, wherein each vision transformer block uses a Cross-Shaped Window multi-headed self-attention mechanism, wherein the self-attention mechanism comprises horizontal and vertical stripes in parallel that form a cross-shaped window, and wherein the widths of the stripes are gradually increased throughout the depth of the network.

14. The image processing apparatus according to any one of claims 11 to 13, wherein each vision transformer block is an Enhanced Cross-Shaped Window transformer block combining a Cross-Shaped Window self-attention mechanism with a Locally-enhanced Feed-Forward module and a Locally-Enhanced Positional Encoding module.

15. The image processing apparatus according to any one of claims 11 to 14, wherein the network comprises a bottleneck stage between the last encoder level and the first decoder level.

**Patentansprüche**

1. Bildverarbeitungsverfahren, umfassend:

Erfassen eines ersten Bildes, dessen räumliche Auflösung und Helligkeit zu verbessern sind; Erzeugen eines Residualbilds aus dem ersten Bild unter Verwendung eines skalenübergreifenden hierarchischen neuronalen Netzes zum gemeinsamen Lernen von Schwachlichtkorrektur und Superauflösung, wobei das Netz eine Encoder-Stufe und eine Decoder-Stufe umfasst, die mehrere symmetrische Encoder-Decoder-Ebenen bilden, wobei ein Encoder und Decoder in einer Ebene jeweils einen Vision-Transformer-Block umfasst; Erzeugen eines rekonstruierten Bildes basierend auf dem ersten Bild und dem Residualbild.

2. Bildverarbeitungsverfahren nach Anspruch 1, wobei das Netz ein residuales neuronales Netz ist, das Skip-Verbindungen umfasst.

3. Bildverarbeitungsverfahren nach einem der vorhergehenden Ansprüche,

wobei das Netz eine U-förmige Architektur aufweist, wobei die Encoder-Stufe die räumliche Auflösung des ersten Bildes reduziert, während die Anzahl von Merkmalskanälen des ersten Bildes auf jeder Ebene erhöht wird, und die Decoder-Stufe die räumliche Auflösung erhöht, während die Anzahl von Merkmalskanälen auf jeder Ebene reduziert wird,

wobei die räumliche Auflösung des erzeugten Residualbilds mit der räumlichen Auflösung des ersten erfassten Bilds identisch ist.

4. Bildverarbeitungsverfahren nach einem der vorhergehenden Ansprüche,
wobei ein Vision-Transformer-Block jeweils einen Multi-Head-Self-Attention-Mechanismus mit kreuzförmigen Fenstern verwendet.

5. Bildverarbeitungsverfahren nach einem der vorhergehenden Ansprüche,
wobei ein Vision-Transformer-Block jeweils ein erweiterter Transformer-Block mit kreuzförmigen Fenstern ist, der durch Kombinieren eines Self-Attention-Mechanismus mit kreuzförmigen Fenstern mit einem Feed-Forward-Modul mit lokaler Kontextanreicherung und einem Positions-Encoding-Modul mit lokaler Kontextanreicherung erhalten wird.

6. Bildverarbeitungsverfahren nach einem der vorhergehenden Ansprüche,
wobei das rekonstruierte Bild $\hat{I}_{NLHR}$ basierend auf der folgenden Gleichung erzeugt wird:

$$\hat{I}_{NLHR} = (I_{LLLR} + I_R) \uparrow_s$$

wobei $I_{LLLR}$ das erste Bild ist, $I_R$ das Residualbild ist und s ein Skalierungsfaktor für das Upsampling ist und das Symbol + elementweise Addition bedeutet.

7. Bildverarbeitungsverfahren nach einem der vorhergehenden Ansprüche, umfassend das Extrahieren einer Low-Level-Merkmalskarte $F_0 \in \mathbb{R}^{H \times W \times C}$ aus dem ersten Bild,
wobei W und H eine Breite und eine Höhe des ersten Bildes und C eine Anzahl von Merkmalskanälen des ersten Bildes darstellen, sowie das Eingeben der Low-Level-Merkmalskarte $F_0$ in die erste Encoder-Ebene.

8. Bildverarbeitungsverfahren nach einem der vorhergehenden Ansprüche,
wobei das Netz eine Engpassstufe zwischen der letzten Encoder-Ebene und der ersten Decoder-Ebene umfasst.

9. Bildverarbeitungsverfahren nach einem der vorhergehenden Ansprüche,
wobei das neuronale Netz im Voraus mit Patch-Bildern niedriger Auflösung und entsprechenden Patch-Bildern hoher Auflösung trainiert wird, wobei die Patch-Bilder niedriger Auflösung größer als 64 x 64 Pixel sind, und wobei die entsprechenden Patch-Bilder hoher Auflösung mindestens 2 bis 4 Mal größer sind.

10. Computerprogramm, das bei Ausführung auf einem Computer diesen dazu veranlasst, das Verfahren nach einem der vorhergehenden Ansprüche auszuführen.

11. Bildverarbeitungsvorrichtung, umfassend:

eine Erfassungseinrichtung, die konfiguriert ist, ein erstes Bild zu erfassen, dessen räumliche Auflösung und Helligkeit zu verbessern sind;
erste Erzeugungseinrichtung, die konfiguriert ist, ein Residualbild aus dem ersten Bild unter Verwendung eines skalenübergreifenden hierarchischen neuronalen Netzes zum gemeinsamen Lernen von Schwachlichtkorrektur und Superauflösung zu erzeugen, wobei das Netz eine Encoder-Stufe und eine Decoder-Stufe umfasst, die mehrere symmetrische Encoder-Decoder-Ebenen bilden, wobei ein Encoder und Decoder in einer Ebene jeweils einen Vision-Transformer-Block umfasst;
eine zweite Erzeugungseinrichtung, die konfiguriert ist, ein rekonstruiertes Bild basierend auf dem ersten Bild und dem Residualbild zu erzeugen.

12. Bildverarbeitungsvorrichtung nach Anspruch 11, wobei das Netz ein residuales neuronales Netz ist, das Skip-Verbindungen umfasst.

13. Bildverarbeitungsvorrichtung nach Anspruch 11 oder 12, wobei ein Vision-Transformer-Block jeweils einen Multi-Head-Self-Attention-Mechanismus mit kreuzförmigen Fenstern verwendet, wobei der Self-Attention-Mechanismus parallele horizontale und vertikale Streifen umfasst, die ein kreuzförmiges Fenster bilden, und wobei die Breiten der Streifen über die gesamte Tiefe des Netzes allmählich zunehmen.

**14.** Bildverarbeitungsvorrichtung nach einem der Ansprüche 11 bis 13,
wobei ein Vision-Transformer-Block jeweils ein erweiterter Transformer-Block mit kreuzförmigen Fenstern ist, der einen Self-Attention-Mechanismus mit kreuzförmigen Fenstern mit einem Feed-Forward-Modul mit lokaler Kontextanreicherung und einem Positions-Encoding-Modul mit lokaler Kontextanreicherung kombiniert.

**15.** Bildverarbeitungsvorrichtung nach einem der Ansprüche 11 bis 14, wobei das Netz eine Engpassstufe zwischen der letzten Encoder-Ebene und der ersten Decoder-Ebene umfasst.

**Revendications**

**1.** Procédé de traitement d'image comprenant :

l'acquisition d'une première image dont la résolution spatiale et la luminosité doivent être améliorées ;
la génération d'une image résiduelle à partir de la première image à l'aide d'un réseau neuronal hiérarchique multi-échelles pour l'apprentissage conjoint d'amélioration de faible éclairage et de super-résolution, le réseau comprenant une étage codeur et un étage décodeur formant une pluralité de niveaux codeur-décodeur symétriques, chaque codeur et décodeur dans chaque niveau comprenant un bloc transformateur de vision ;
la génération d'une image reconstruite sur la base de la première image et de l'image résiduelle.

**2.** Procédé de traitement d'image selon la revendication 1, dans lequel le réseau est un réseau neuronal résiduel comprenant des connexions de saut.

**3.** Procédé de traitement d'image selon l'une quelconque des revendications précédentes, dans lequel le réseau présente une architecture en forme de U, l'étage codeur réduisant la résolution spatiale de la première image tout en augmentant le nombre de canaux de caractéristiques de la première image à chaque niveau, et l'étage décodeur augmentant ladite résolution spatiale tout en réduisant ledit nombre de canaux de caractéristiques à chaque niveau, dans lequel la résolution spatiale de l'image résiduelle générée est identique à la résolution spatiale de la première image acquise.

**4.** Procédé de traitement d'image selon l'une quelconque des revendications précédentes, dans lequel chaque bloc transformateur de vision utilise un mécanisme d'auto-attention multi-têtes à fenêtre en forme de croix.

**5.** Procédé de traitement d'image selon l'une quelconque des revendications précédentes, dans lequel chaque bloc transformateur de vision est un bloc transformateur à fenêtre en forme de croix améliorée obtenu en combinant un mécanisme d'auto-attention à fenêtre en forme de croix avec un module prédictif localement amélioré et un module de codage positionnel localement amélioré.

**6.** Procédé de traitement d'image selon l'une quelconque des revendications précédentes, dans lequel l'image reconstruite $\hat{I}_{NLHR}$ est générée sur la base de l'équation suivante :

$$\hat{I}_{NLHR} = (I_{LLLR} + I_R) \uparrow s$$

où $I_{LLLR}$ est la première image, $I_R$ est l'image résiduelle et s est un facteur de mise à l'échelle pour le suréchantillonnage et le symbole + signifie une addition élément par élément.

**7.** Procédé de traitement d'image selon l'une quelconque des revendications précédentes, comprenant l'extraction d'une carte de caractéristiques de bas niveau $F_0 \varepsilon R^{H \times W \times C}$ à partir de la première image, où W et H sont une largeur et une hauteur de la première image et C un nombre de canaux de caractéristiques de la première image, et l'entrée de la carte de caractéristiques de bas niveau $F_0$ dans le premier niveau encodeur.

**8.** Procédé de traitement d'image selon l'une quelconque des revendications précédentes, dans lequel le réseau comprend un étage de col d'étranglement entre le dernier niveau codeur et le premier niveau décodeur.

**13**

**EP 4 258 204 B1**

9. Procédé de traitement d'image selon l'une quelconque des revendications précédentes, dans lequel le réseau neuronal est préalablement entraîné avec des images correctives basse résolution et des images correctives haute résolution correspondantes, dans lequel les images correctives basse résolution sont plus grandes que 64 x 64 pixels, et dans lequel les images correctives haute résolution correspondantes sont au moins 2 à 4 fois plus grandes.

10. Programme informatique qui, lorsqu'il est exécuté sur un ordinateur, amène l'ordinateur à réaliser le procédé selon l'une quelconque des revendications précédentes.

11. Appareil de traitement d'image comprenant :

des moyens d'acquisition configurés pour acquérir une première image dont la résolution spatiale et la luminosité doivent être améliorées ;
des premiers moyens de génération configurés pour générer une image résiduelle à partir de la première image à l'aide d'un réseau neuronal hiérarchique multi-échelles pour l'apprentissage conjoint d'amélioration de faible éclairage et de super-résolution, le réseau comprenant un étage codeur et un étage décodeur formant une pluralité de niveaux codeur-décodeur symétriques, chaque codeur et décodeur dans chaque niveau comprenant un bloc transformateur de vision ;
des seconds moyens de génération configurés pour générer une image reconstruite sur la base des première image et image résiduelle.

12. Appareil de traitement d'image selon la revendication 11, dans lequel le réseau est un réseau neuronal résiduel comprenant des connexions de saut.

13. Appareil de traitement d'image selon la revendication 11 ou 12, dans lequel chaque bloc transformateur de vision utilise un mécanisme d'auto-attention multi-têtes à fenêtre en forme de croix, dans lequel le mécanisme d'auto-attention comprend des bandes horizontales et verticales en parallèle qui forment une fenêtre en forme de croix, et dans lequel les largeurs des bandes sont progressivement augmentées sur toute la profondeur du réseau.

14. Appareil de traitement d'image selon l'une quelconque des revendications 11 à 13, dans lequel chaque bloc transformateur de vision est un bloc transformateur à fenêtre en forme de croix améliorée combinant un mécanisme d'auto-attention à fenêtre en forme de croix avec un module prédictif localement amélioré et un module de codage positionnel localement amélioré.

15. Appareil de traitement d'image selon l'une quelconque des revendications 11 à 14, dans lequel le réseau comprend un étage de goulot d'étranglement entre le dernier niveau codeur et le premier niveau décodeur.

**14**

FIGURE 1A

FIGURE 1B

FIGURE 1C

FIGURE 1D

FIGURE 2

$X$

$$\text{SoftMax}\left(\frac{QK^T}{\sqrt{(D)}}\right)V$$

LePE $(V)$

$V$   $K$   $Q$

FIGURE 3

Real low-light low-resolution image        Manual exposure correction

RELIEF (invention)                          ×4 Ground-truth

FIGURE 4

FIGURE 5

FIGURE 6

LLLR  MIRNet  ESRGAN  SwinIR  RELIEF (invention)  GT

LLR (a) (b) GT

FIGURE 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Structure-Preserving and Color-Restoring Up-Sampling for Single Low-Light Image. **CHEN LIANGLIANG et al.** IEEE TRANSACTIONS ON CIRCUITS AND SYSTEMS FOR VIDEO TECHNOLOGY. IEEE, 04 June 2021, vol. 32, 1889-1902

- RFormer: Transformer-based Generative Adversarial Network for Real Fundus Image Restoration on A New Clinical Benchmark. **ZHUO DENG et al.** ARXIV.ORG. CORNELL UNIVERSITY LIBRARY, 03 January 2022